# EUROPÄISCHE PATENTSCHRIFT

(11) **EP 2 059 426 B1**
(45) Veröffentlichungstag und Bekanntmachung des Hinweises auf die Patenterteilung: **09.06.2010**
(21) Anmeldenummer: 07765046.3
(22) Anmeldetag: 04.07.2007
(51) Int. Cl.: B60T 13/68

(54) **VENTILEINHEIT, BREMSSTEUERUNGSEINRICHTUNG, FAHRZEUGBREMSANLAGE SOWIE FAHRZEUG**
VALVE UNIT, BRAKE CONTROL DEVICE, VEHICLE BRAKE SYSTEM AND VEHICLE
UNITÉ DE SOUPAPE, DISPOSITIF DE COMMANDE DE FREINAGE, SYSTÈME DE FREINAGE DE VÉHICULE ET VÉHICULE CORRESONDANT

(30) Priorität: 31.08.2006 DE 102006041012
(43) Veröffentlichungstag der Anmeldung: 20.05.2009
(73) Patentinhaber: WABCO GmbH, 30453 Hannover (DE)
(72) Erfinder: BENSCH, Uwe, 30161 Hannover (DE); HELMER, Jörg, 88267 Vogt (DE); KIEL, Bernd-Joachim, 31515 Wunstorf (DE); MENZE, Wilfried, 31832 Springe (DE)
(86) Internationale Anmeldenummer: PCT/EP2007/005910
(87) Internationale Veröffentlichungsnummer: WO 2008/025400

(56) Entgegenhaltungen:
- EP-A1- 1 571 061
- DE-A1- 3 501 708
- DE-A1- 10 336 611
- GB-A- 1 134 032
- GB-A- 1 358 110

## Beschreibung

Die Erfindung betrifft eine Ventileinheit für eine elektropneumatische Bremssteuerungseinrichtung zur Steuerung einer luftmengenverstärkenden Ventileinrichtung zur Steuerung einer Feststellbremse eines Fahrzeugs nach dem Oberbegriff des Anspruchs 1. Ferner betrifft die Erfindung gemäß Anspruch 11 eine elektropneumatische Bremssteuerungseinrichtung mit einer derartigen Ventileinheit. Des weiteren betrifft die Erfindung gemäß Anspruch 14 eine elektrisch gesteuerte pneumatische Fahrzeugbremsanlage mit einer derartigen Bremssteuerungseinrichtung. Schließlich betrifft die Erfindung gemäß Anspruch 15 ein Fahrzeug mit einer derartigen elektrisch gesteuerten pneumatischen Bremsanlage.

Ventileinrichtungen für elektropneumatische Bremssteuerungseinrichtungen zur Steuerung von Fahrzeug-Feststellbremsen sind bspw. aus DE 103 36 611 A1 oder EP 1 571 061 A1 bekannt. Diese bekannten Bremssteuerungseinrichtungen werden in Bremsanlagen eingesetzt, die neben einer mittels eines Bremspedals betätigbaren Betriebsbremse eine Feststellbremse (oftmals auch als Parkbremse oder Handbremse bezeichnet) aufweisen, welche mittels eines elektrischen Signalgebers betätigbar ist.

Die Feststellbremse wird bei diesen bekannten Bremsanlagen regelmäßig mittels Federspeicherbremszylindern eingelegt. Um die Feststellbremse zu lösen, muss der Federspeicherteil der Federspeicherbremszylinder mit Druckluft beaufschlagt werden. Hierzu ist ein Belüften des Federspeicherteils erforderlich. Der notwendige Druck zum Belüften wird aus einem Druckluftvorrat zugeführt. Diese Druckzufuhr ist jedoch nicht permanent eingeschaltet, sondern kann auch abgesperrt werden. Ferner kann auch der Druck im Federspeicherbremszylinder abgesenkt, der Federspeicherteil also entlüftet werden. Durch dieses Entlüften wird die Feststellbremse eingelegt.

Zur Steuerung des Druckes im Federspeicherbremszylinder ist herkömmlicherweise ein Relaisventil vorgesehen. Mit diesem Relaisventil kann die Druckzufuhr von dem Druckluftvorratsbehälter zum Federspeicherteil der Federspeicherbremszylinder gesteuert werden. Die Steuerung erfolgt unter Zuhilfenahme elektropneumatischer Ventileinrichtungen, insbesondere mittels elektrisch betätigbarer Magnetventile, die einen am Relaisventil zugeführten Steuerdruck regulieren.

Bei einer bekannten Bremsanlage gemäß DE 103 36 611 A1 wird hierzu ein Bistabilventil eingesetzt. Dieses Ventil kann zwei stabile Zustände einnehmen. Es behält im Falle eines Stromausfalls den momentan eingestellten Zustand. Ferner ist bei dieser Bremsanlage zwischen das Bistabilventil und den Steuereingang des Relaisventils ein Haltenventil geschaltet. Mittels des Bistabilventils und des Haltenventils kann der Druck am Steuereingang entweder gehalten, erhöht oder abgesenkt werden. In entsprechender Weise verändert sich der Druck am Ausgang des Relaisventils. Auf diese Weise kann mittels elektrischer Signale an das Bistabilventil und das Haltenventil die Feststellbremse gelöst oder eingelegt werden.

Das Bistabilventil ist jedoch aufgrund seines Aufbaus kompliziert und daher teuer. Ferner verbleibt das Bistabilventil, wie oben erwähnt, bei einem Ausfall der elektrischen Energieversorgung in seinem vorherigen Zustand. Daher kann bei einem Ausfall der elektrischen Energieversorgung ein Fahrzeug mit einer derartigen Bremsanlage nicht sicher abgestellt werden. D.h. es kann nicht derart abgestellt werden, dass der Federspeicherteil der Federspeicherbremszylinder automatisch und dauerhaft entlüftet und daher die Feststellbremse eingelegt wird.

Zwar wurden bereits in DE 35 01 708 A1 elektromagnetisch betätigbare Mehrwegeventile vorgeschlagen, die in ihrem Aufbau weniger komplex sind. Insbesondere wurde vorgeschlagen, in einem Mehrwegeventil zwei einander gegenüberliegend angeordnete Ventile vorzusehen. Dabei ist jedem der beiden Ventile je ein Anker zugeordnet, welcher mit einer zwischen den beiden Ventilen angeordneten Spule zusammenwirkt. Die den Ankern zugeordneten Federn sind dabei derart ausgelegt, dass unterschiedliche Magnetkräfte zur Betätigung der beiden Ventile erforderlich sind. Diese Magnetkräfte werden durch Anlegen eines durch die Spule fließenden Stroms erzeugt. Indem jedem Ventil ein separater Anker zugeordnet ist, wird eine voneinander unabhängige Betätigung der beiden Ventile durch entsprechende Bestromung der Spule ermöglicht.

Dieses bekannte Ventil hat jedoch den Nachteil, dass im unbestromten Zustand dieses Ventils sein Eingang mit dem zum Verbraucher führenden Ausgang verbunden, während der Auslass des Ventils abgesperrt ist. Würde man ein derartiges Ventil anstelle des o.g. Bistabilventils und Haltenventils verwenden, würde im Falle eines Ausfalls der elektrischen Energieversorgung der volle Vorratsdruck in den Steuereingang des Relaisventils eingeleitet und somit infolge der sich daraus ergebenden Belüftung des Federspeicherteils der Federspeicherbremszylinder die Feststellbremse gelöst werden. Dies ist jedoch unerwünscht, da im Falle eines Ausfalls der elektrischen Energieversorgung das Fahrzeug nicht mehr sicher abgestellt werden kann.

Der Erfindung liegt daher die Aufgabe zugrunde, eine einfache Ventileinheit für eine elektropneumatische Bremssteuerungseinrichtung zur Steuerung einer luftmengenverstärkenden Ventileinrichtung zur Betätigung einer Feststellbremse eines Fahrzeugs bereitzustellen, welche auch im Falle eines Ausfalls der elektrischen Spannungsversorgung ein sicheres Abstellen des Fahrzeugs ermöglicht.

Diese Aufgabe wird durch die in den Patentansprüchen 1, 11, 14 und 15 angegebene Erfindung gelöst.

Durch die Verwendung eines Entlüftungsventils mit drei Zuständen zur Entlüftung eines Steuereingangs einer luftmengenverstärkenden Ventileinrichtung kann erfindungsgemäß ein mehrstufiges Entlüften stattfinden. In einem ersten Zustand des Entlüftungsventils ist der Steuereingang der luftmengenverstärkenden Ventileinrichtung über eine Blende gedrosselt und daher langsam entlüftbar. Dieses gedrosselte Entlüften entspricht einer ersten Entlüftungsstufe. In einem weiteren Zustand des Entlüftungsventils ist der Steuereingang der luftmengenverstärkenden Ventileinrichtung ungedrosselt und somit schlagartig entlüftbar. Dieses ungedrosselte Entlüften entspricht einer zweiten Entlüftungsstufe. In einem weiteren Zustand des Entlüftungsventils ist vorgesehen, dass der Steuereingang der luftmengenverstärkenden Ventileinrichtung nicht entlüftet wird.

Das gedrosselte Entlüften des Steuereingangs ist vorteilhaft, wenn die Feststellbremse des Fahrzeugs langsam eingelegt werden soll. Dies ist insbesondere bei einem Ausfall der elektrischen Energieversorgung wünschenswert, da das Fahrzeug dann langsam eingebremst wird und sicher abgestellt werden kann. Ein schlagartiges volles Entlüften des Steuereingangs der luftmengenverstärkenden Ventileinrichtung und somit des Federspeicherteils der Federspeicherbremszylinder ist sinnvoll, wenn der Fahrer das Fahrzeug bspw. mittels der Betriebsbremse bereits zum Stillstand gebracht hat und die Feststellbremse einlegen möchte. Dies kann schlagartig erfolgen, ohne dass hierdurch eine Verkehrsgefährdung zu erwarten wäre.

Vorzugsweise ist das Entlüftungsventil als Doppelankermagnetventil ausgebildet mit zwei in einer gemeinsamen Ankerführungsanordnung angeordneten und mit je einer Feder belasteten Magnetankern, nämlich einem Primäranker und einem Sekundäranker, welche jeweils durch eine für beide Magnetanker vorgesehene Magnetspule betätigbar sind. Durch ein als Doppelankermagnetventil vorgesehenes Entlüftungsventil können mit nur einer Spule zwei Anker und somit zwei Teilventile des Doppelankermagnetventils betätigt werden. Hierdurch verringert sich zum einen der Aufwand beim Aufbau des mehrstufigen Entlüftungsventils. Zum anderen verringert sich der Aufwand bei der Kontaktierung und bei der elektrischen Ansteuerung der Ventileinheit, da auch für das mehrstufige Entlüftungsventil lediglich zwei Anschlüsse für die Magnetspule erforderlich sind. Ebenso reduziert sich die Anzahl der benötigten Endstufen zum Bestromen dieses Magnetventils, einschließlich der zu den Endstufen gehörenden Bauteile. Ferner wird die gesamte Stromaufnahme durch die Verwendung lediglich einer Spule für zwei Teilventile reduziert. Hieraus folgt ein günstiges Wärmeverhalten der Bremssteuerungseinrichtung.

Ferner ergibt sich eine kompakte Bauweise der Ventileinheit gegenüber einer Ventileinheit, die für ein mehrstufiges Entlüften mehrere eigenständige Ventile vorsehen würde. Aufgrund der kompakteren Bauweise sowie der geringeren Anzahl von Bauteilen können ferner auch die Herstellkosten reduziert werden.

Vorzugsweise weist das Doppelankermagnetventil einen mit dem Steuereingang der luftmengenverstärkenden Ventileinrichtung verbindbaren und dem Sekundäranker zugeordneten Einlass auf. Vorteilhafterweise weist es ferner einen mit einer Entlüftungseinrichtung verbindbaren und dem Primäranker zugeordneten ersten Auslass sowie einen mit der Entlüftungseinrichtung verbindbaren und dem Sekundäranker zugeordneten zweiten Auslass auf. Dabei ist der erste Auslass über die Blende gedrosselt und der zweite Auslass ungedrosselt mit der Entlüftungseinrichtung verbindbar. Bei stromloser Magnetspule befinden sich der Primäranker und der Sekundäranker in ihren durch die Federbelastung festgelegten Grundstellungen, in denen das Entlüftungsventil seinen ersten Zustand einnimmt, bei dem der Steuereingang der luftmengenverstärkenden Ventileinrichtung über eine Blende gedrosselt entlüftbar ist. Dabei ist der Einlass des Entlüftungsventils mit seinem ersten Auslass verbunden und der Einlass von dem zweiten Auslass abgesperrt. In diesem - stromlosen - Zustand findet also eine permanente gedrosselte Entlüftung des Steuereingangs der luftmengenverstärkenden Ventileinrichtung und somit eine gedrosselte Entlüftung der Federspeicherbremszylinder statt. Auf diese Weise wird die Feststellbremse langsam eingelegt. Ein fahrendes Fahrzeug wird somit langsam eingebremst und kann wegen der dauerhaften Entlüftung der Federspeicherbremszylinder sicher abgestellt werden.

Bei Einspeisung eines ersten niedrigen Stroms in die Magnetspule wird zunächst nur der Primäranker bestromt und auf diese Weise in seine Schaltstellung versetzt. Bei diesem niedrigen Strom verbleibt jedoch der Sekundäranker in seiner federbelasteten Grundstellung. Bei diesen Schaltstellungen ist der Einlass des Entlüftungsventils sowohl von dem ersten als auch von dem zweiten Auslass abgesperrt. Das Entlüftungsventil nimmt daher seinen zweiten Zustand ein, bei dem der Steuereingang der luftmengenverstärkenden Ventileinrichtung nicht entlüftbar ist, sondern der Druck am Steuereingang auf seinem aktuellen Wert gehalten werden kann.

Durch Einspeisung eines höheren Stromes in die Magnetspule wird auch der Sekundäranker in seine Schaltstellung versetzt, so dass dann der Einlass des Entlüftungsventils mit seinem zweiten direkt zur Entlüftung führenden Auslass verbunden ist. Vorzugsweise wird dabei der Einlass des Entlüftungsventils von seinem zum gedrosselten ersten Auslass führenden Auslass abgesperrt. Das Entlüftungsventil nimmt dabei seinen dritten Zustand ein, bei dem der Steuereingang der luftmengenverstärkenden Ventileinrichtung ungedrosselt entlüftbar ist. In diesem Zustand kann eine schlagartige Entlüftung des Steuereingangs der luftmengenverstärkenden Ventileinrichtung und damit auch des Federspeicherteils der Federspeicherbremszylinder erfolgen. Durch Herstellen dieses Zustandes kann folglich die Feststellbremse schlagartig eingelegt werden.

Bei einer alternativen Ausführungsform wird der o.g. dritte Zustand für schlagartiges Entlüften bereits bei Einspeisung des niedrigeren, ersten Magnetstroms erreicht, während der o.g. zweite Zustand, bei dem der Einlass des Entlüftungsventils von seinen beiden Auslässen abgesperrt ist, erst bei Einspeisung des zweiten, höheren Magnetstroms eingenommen wird.

Bei einer weiteren vorteilhaften Ausführungsform ist die auf den Primäranker ausgeübte Federkraft einer zugeordneten Feder kleiner als die auf den Sekundäranker ausgeübte Federkraft einer weiteren, dem Sekundäranker zugeordneten Feder. Vorteilhafterweise werden hierzu Federn unterschiedlicher Stärke verwendet. Durch diese Maßnahme kann das Schaltverhalten des Magnetventilsystems verbessert werden.

Bei einer weiteren vorteilhaften Ausführungsform weisen der Primäranker und der Sekundäranker unterschiedliche Durchmesser auf. Insbesondere weist der Sekundäranker einen kleineren Durchmesser auf als der Primäranker. Hierdurch ergibt sich erstens der Vorteil, dass der Konstruktion der Ankerführungsanordnung derart gestaltet werden kann, dass sie samt der beiden Magnetanker von einer Seite in die Spule montierbar ist. Zweitens ergibt sich der Vorteil, dass aufgrund der unterschiedlichen Größen, insbesondere Durchmesser der Anker unterschiedliche Magnetkräfte auf die Anker wirken. Hierdurch kann das Schaltverhalten der Ventileinheit günstig beeinflusst werden. Es soll nämlich zunächst der Primäranker von der Magnetspule bei einem ersten niedrigen, die Magnetspule durchfließenden Strom und erst bei einem höheren, die Magnetspule durchfließenden Strom auch der Sekundäranker angezogen werden.

Bei einer weiteren vorteilhaften Ausführungsform sind der Primäranker und der Sekundäranker baugleich ausgeführt. Dies hat den Vorteil, dass aufgrund größerer Stückzahlen die Herstellkosten dieser Anker reduziert werden können.

Bei einer weiteren vorteilhaften Ausführungsform tauchen der Primäranker und der Sekundäranker unterschiedlich tief in die Magnetspule ein. Insbesondere taucht der Primäranker tiefer in die Magnetspule ein als der Sekundäranker. Dies hat den Vorteil, dass die von der Magnetspule auf den Primäranker ausgeübte Magnetkraft größer ist als die von der Magnetspule auf den Sekundäranker ausgeübte Magnetkraft. Auch hierdurch wird das Schaltverhalten der Ventileinheit günstig beeinflusst.

Bei einer besonders bevorzugten Ausführungsform ist neben dem Entlüftungsventil auch ein Belüftungsventil in der Ventileinheit vorgesehen. Dabei ist der Einlass des Belüftungsventils mit einem mit einem Druckluftvorrat verbindbaren ersten Verbindungsorgan verbunden. Ferner ist der erste Auslass des Entlüftungsventils über die Blende und der zweite Auslass des Entlüftungsventils mit einem mit der Entlüftungseinrichtung verbindbaren zweiten Verbindungsorgan verbunden. Schließlich ist der Auslass des Belüftungsventils mit dem Einlass des Entlüftungsventils und mit einem mit dem Steuereingang der luftmengenverstärkenden Ventileinrichtung verbindbaren dritten Verbindungsorgan verbunden.

Im vorliegenden Zusammenhang ist der Begriff "Verbindungsorgan" derart zu verstehen, dass er jedwede Verbindungsmittel umfasst, wie insbesondere pneumatische Verbindungsleitungen, Verbindungskanäle, Verbindungsbohrungen oder sonstige Durchgänge sowie Verbindungsanschlüsse, insbesondere Anschlüsse für pneumatische Verbindungsleitungen, -kanäle und -bohrungen.

Die Ventileinheit ist entweder als selbstständige Vorrichtung oder als unselbstständiger, integraler Teil einer Bremssteuerungseinrichtung ausgebildet.

Bei einer Ausführung der Ventileinheit als selbstständige Vorrichtung ergibt sich eine sehr kompakte Bauweise, bei der sowohl das Entlüftungsventils als auch das Belüftungsventil in einer gemeinsamen Einheit, vorteilhafterweise in einem gemeinsamen Gehäuse untergebracht sind. Diese Einheit kommt mit nur drei pneumatischen und drei elektrischen Anschlüssen aus. Diese kompakte Bauweise reduziert die Anzahl erforderlicher Bauteile und somit auch die Herstellkosten.

Weitere vorteilhafte Ausführungsformen ergeben sich aus den Unteransprüchen sowie aus den anhand der beigefügten Zeichnungen näher erläuterten Ausführungsbeispielen. In der Zeichnung zeigt:
- Fig. 1: eine Druckluftbremsanlage in vereinfachter schematischer Darstel- lung mit einer elektropneumatischen Bremssteuerungseinrichtung zur Steuerung einer Feststellbremse einschließlich zweier Ventileinheiten gemäß einem Ausführungsbeispiel der Erfindung;
- Fig. 2: eine Ventileinheit gemäß einem Ausführungsbeispiel der Erfindung für eine Bremssteuerungseinrichtung gemäß Fig. 1;
- Fig. 3: eine vereinfachte schematische Darstellung einer Bremssteuerungs- einrichtung für eine Feststellbremse einschließlich einer Ventileinheit gemäß einem weiteren Ausführungsbeispiel der Erfindung und
- Fig. 4: eine vereinfachte schematische Darstellung einer Bremssteuerungs- einrichtung für eine Feststellbremse einschließlich einer Ventileinheit gemäß einem weiteren Ausführungsbeispiel der Erfindung.

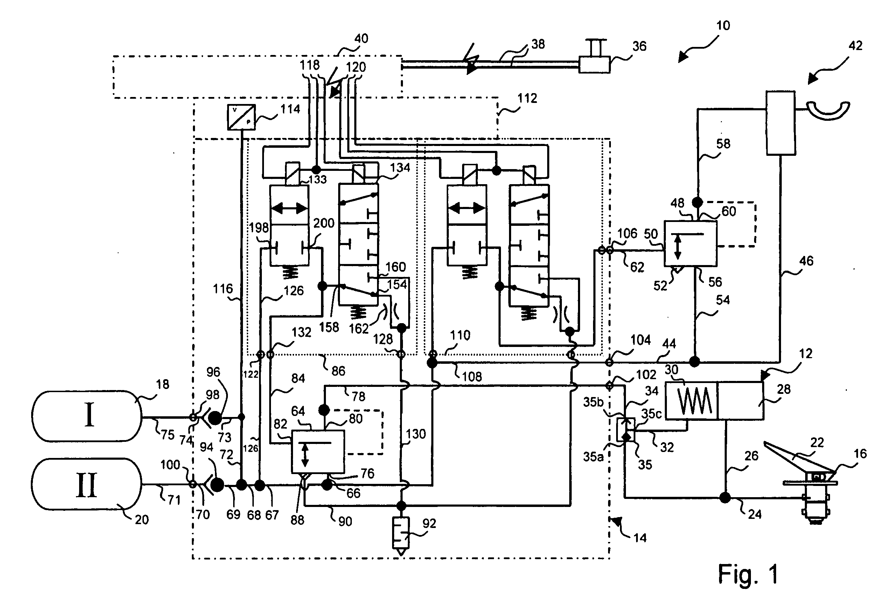

Fig. 1 zeigt schematisch einen Teil einer Druckluftbremsanlage 10 für ein Fahrzeug und zwar insbesondere eine elektropneumatische Bremssteuerungseinrichtung zur Steuerung einer Feststellbremse des Fahrzeugs. Derartige Druckluftbremsanlagen werden bspw. bei Nutzfahrzeugen, Lastkraftwagen oder Bussen verwendet. Besondere Anwendung finden derartige Bremsanlagen bei Fahrzeugzügen bestehend aus einem Zugfahrzeug und einem Anhänger.

Fig. 1 zeigt lediglich einige zum Verständnis der vorliegenden Erfindung wichtige Komponenten der Bremsanlage 10. Die Bremsanlage 10 wird elektrisch gesteuert, d.h. die Bremsdruckzumessung zu Bremszylindern zur Betätigung von an den Fahrzeugrädern vorgesehenen Radbremsen wird durch elektrische bzw. elektronische Steuerelemente gesteuert. Die Bremszylinder sind teilweise oder vollständig als kombinierte Betriebs- und Federspeicherbremszylinder 12 (in Fig. 1 ist der Übersichtlichkeit halber lediglich ein derartiger Bremszylinder dargestellt) ausgebildet, wobei der Federspeicherteil von einer als Feststellbremsmodul 14 ausgebildeten elektropneumatischen Bremssteuerungseinrichtung zur Steuerung der Feststellbremse gesteuert wird.

Die Bremsanlage 10 weist einen Bremswertgeber 16 auf, der einen Bremswunsch des Fahrers erfasst. Der Bremswertgeber 16 umfasst einen elektrischen Teil und einen pneumatischen oder hydraulischen Teil, wobei in Fig. 1 lediglich der pneumatische Teil dargestellt ist. Der pneumatische Teil wird von einem ersten Druckluftvorratsbehälter 18 und einem zweiten Druckluftvorratsbehälter 20 mit Druckluft über (nicht dargestellte) Druckluftleitungen versorgt. Diese Druckluftvorratsbehälter 18, 20 dienen der Druckluftversorgung der Bremszylinder der Betriebsbremse. Sie können aber auch, wie in Fig. 1 veranschaulicht, der Druckluftversorgung der Feststellbremse dienen. Alternativ kann die Druckluft für die Feststellbremse von einem separaten Druckluftvorratsbehälter zugeführt werden.

Durch Betätigung eines Bremspedals 22 erzeugt der Bremswertgeber 16 entweder durch elektrische Ansteuerung von elektropneumatischen Einrichtungen oder direkt eine pneumatische Stellgröße, die über eine Druckluftleitung 24, 26 an den kombinierten Betriebs- und Federspeicherbremszylinder 12 geleitet wird. Der kombinierte Betriebs- und Federspeicherbremszylinder 12 ist als kombinierter Federspeicher-/Membranzylinder ausgebildet. Er weist neben der Funktion eines Membranzylinders zusätzlich eine Federspeicherfunktion auf. Dieser Bremszylinder 12 weist daher einen Membranteil, welcher pneumatisch mit der Betriebsbremsanlage verbunden sowie mit dem eigentlichen Bremsdruck beaufschlagbar ist, und einen Federspeicherteil 30 auf, welcher pneumatisch von dem Membranteil 28 getrennt und über gesonderte Druckluftleitungen 32, 34 mit Druckluft beaufschlagbar ist. Der Federspeicherteil 30 bildet einen Teil der Feststellbremse. Der Federspeicherteil 30 beinhaltet die Federspeicherfunktion, welche bei Druckbeaufschlagung des Federspeicherteils 30 eine Speicherfeder vorspannt und dabei eine Bremswirkung der Federspeicherfunktion verhindert bzw. verringert, während sich bei Entlüftung des Federspeicherteils 30 die Speicherfeder entspannt und dabei eine Bremswirkung im Rahmen der Federspeicherfunktion auf die mit dem jeweiligen Bremszylinder verbundene Bremse ausübt. Bremszylinder dieses Typs werden im vorliegenden Zusammenhang als Federspeicherbremszylinder bezeichnet.

Zur Vermeidung einer mechanischen Überbeanspruchung der Bremsmechanik ist ein als Wechselventil bzw. Select-High-Ventil ausgebildetes Überlastschutzventil 35 vorgesehen, das zwischen den Federspeicherteil 30, einen pneumatischen Ausgang 102 des Feststellbremsmoduls und den ausgesteuerten Druck aufweisenden Ausgang des Bremswertgebers 16 geschaltet ist. Dieses Überlastschutzventil 35 wählt den höheren von zwei an seinen beiden Eingängen 35a, 35b anliegenden Drücken, nämlich den höheren des ausgesteuerten Bremsdrucks am Ausgang des Bremswertgebers 16 und des von der luftmengenverstärkenden Ventileinrichtung 64 zur Verfügung gestellten Druckes, aus und führt diesen über seinen Ausgang 35c dem Federspeicherteil 30 des Federspeicherbremszylinders 12 zu. Dieses Überlastschutzventil 35 verhindert eine Addition der von der Betriebsbremse, d.h. über den pneumatischen Teil bzw. Membranteil 28 zugeführten Bremskraft mit der von der Feststellbremse, d.h. dem Federspeicherteil 30 zugeführten Bremskraft, um auf diese Weise eine mechanische Überbeanspruchung der Bremsmechanik der diesem Bremszylinder zugeordneten Radbremse zu vermeiden. Die dem Bremszylinder über den Membranteil 28 zugeführte Bremskraft wird durch die dargestellte Konstruktion nicht um die von dem Federspeicherteil 30 ausgeübte Bremskraft erhöht, da im Falle einer Betätigung der Betriebsbremse die von der Speicherfeder ausgeübte Bremskraft um eine der Betätigung der Betriebsbremse entsprechende Kraft reduziert wird. Somit kann eine kritische Überbeanspruchung der entsprechenden Radbremse vermieden werden.

Mittels des Federspeicherbremszylinders wird eine Feststellbremsfunktion realisiert, die auch bei Fehlen von Druckluft eine Bremsung bzw. ein Feststellen des Fahrzeugs ermöglicht. Die Feststellbremsfunktion ist aktiv, wenn der jeweilige Federspeicherteil 30 des Federspeicherbremszylinders 12 unterhalb eines Mindestdruckwertes entlüftet wird. Der Federspeicherteil 30 des Bremszylinders 12 ist über die Druckluftleitungen 32, 34 mit dem Feststellbremsmodul 14 pneumatisch verbunden. Dieses Feststellbremsmodul 14 erlaubt eine Drucksteuerung mit Hilfe elektronischer Steuerungsmittel.

Ein manuell betätigbarer Feststellbremssignalgeber 36 ist über eine mehradrige elektrische Leitung 38 mit einer elektrischen Steuereinheit 40 des Feststellbremsmoduls 14 elektrisch verbunden. Die elektrischen Einrichtungen im Fahrzeug werden von einer nicht dargestellten elektrischen Energieversorgungseinrichtung, z.B. einer Fahrzeugbatterie, über entsprechende elektrische Leitungen mit Energie versorgt.

Das Fahrzeug ist zur Ankopplung eines Anhängers mit einer weiteren mit Federspeicherbremszylindern ausgestalteten Feststellbremse geeignet. Die Bremsanlage 10 weist daher ein sog. Zugwagenschutzventil 42 auf, welches zur Bremsdrucksteuerung, insbesondere der Feststellbremse des Anhängers dient. Das Zugwagenschutzventil 42 wird über Druckluftleitungen 44, 46 mit dem Vorratsdruck der Druckluftvorratsbehälter 18, 20 versorgt. Ferner wird dem Zugwagenschutzventil 42 ein mittels einer luftmengenverstärkenden Ventileinrichtung, nämlich einem Relaisventil 48, für die Feststellbremse des Anhängers vorgesehener ausgesteuerter Druck bereitgestellt.

Das Relaisventil 48 weist einen Steuereingang 50, einen mittelbar oder unmittelbar mit der Atmosphäre verbundenen Entlüftungsanschluss 52 sowie einen über eine Druckluftleitung 54 mit dem Vorratsdruck der Druckluftvorratsbehälter 18, 20 verbindbaren Einlass 56 sowie einen über eine Druckluftleitung 58 mit dem Zugwagenschutzventil 42 verbindbaren Auslass 60 auf. Der Steuereingang 50 ist über eine Druckluftleitung 62 mit dem Feststeltbremsmodul 14 verbunden.

Das Relaisventil 48 gibt an seinem Auslass 60 einen Ausgangsdruck in die Druckluftleitung 58 ab, der dem über die Druckluftleitung 62 an den Steuereingang 50 und somit dem in eine Steuerkammer des Relaisventils 48 eingesteuerten Druck entspricht. Das Relaisventil 48 entnimmt dabei die hierfür benötigte Druckluft aus der mit dem Einlass 56 des Relaisventils 48 verbundene Druckluftleitung 54, die über weitere Druckluftleitungen mit den Druckluftvorratsbehältern 18, 20 verbunden ist.

Das Feststellbremsmodul 14 weist eine luftmengenverstärkende Ventileinrichtung in Form eines Relaisventils 64 für das Zugfahrzeug auf. Das Relaisventil 64 umfasst einen unmittelbar oder mittelbar über Druckluftleitungen 66 bis 75 mit den Druckluftvorratsbehättern 18, 20 verbundenen Einlass 76. Ferner weist das Relaisventil 64, einen über Druckluftleitungen 78, 34, 32 mit dem Federspeicherteil 30 des Bremszylinders 12 verbundenen Auslass auf. Des weiteren weist das Relaisventil 64 einen Steuereingang 82 auf, der über eine Druckluftleitung 84 mit einer Ventileinheit 86 zur Steuerung der Feststellbremse des Zugfahrzeugs verbunden ist.

Das Relaisventil 64 gibt an seinem Auslass 80 einen Ausgangsdruck in die Druckluftleitung 78 ab, der dem über die Druckluftleitung 64 an den Steuereingang 82 und somit einem in eine Steuerkammer des Relaisventils 64 eingesteuerten Druck entspricht. Das Relaisventil 64 entnimmt dabei die hierfür benötigte Druckluft aus der mit dem Einlass 76 des Relaisventils 64 verbundenen Druckluftzufuhrleitung 66. Eine etwaig notwendige Entlüftung der Druckluftleitung 78 erfolgt über einen mittelbar oder unmittelbar mit der Atmosphäre verbundenen Entlüftungsanschluss 88. In dem in Fig. 1 gezeigten Ausführungsbeispiel ist dieser Entlüftungsanschluss 88 über eine Druckluftleitung 90 mit einer Entlüftungseinrichtung 92 verbunden.

Das Feststellbremsmodul 14 weist ferner jeweils vor die Druckluftvorratsbehälter 18, 20 geschaltete Rückschlagventile 94, 96 auf, welche verhindern, dass im Falle eines Druckabfalls oder eines Abreißens oder einer Beschädigung der Druckluftleitungen 71 bzw. 75 zum Druckluftvorratsbehälter 20 bzw. 18 ein Druckabfall bzw. Druckverlust in dem Feststellbremsmodul 14 auftritt. Ein derartiger ungewollter Druckabfall bzw. Druckverlust ist nämlich unerwünscht, da er zu einem schlagartigen Einlegen der Feststellbremse und somit zu einer Notbremsung des Zugfahrzeuges führen würde. Dies kann u.U. eine unkontrollierbare Fahrsituation auslösen.

Das Feststellbremsmodul 14 weist mehrere pneumatische Anschlüsse 98, 100, 102, 104, 106 auf. Über den Anschluss 98 wird die Druckluftleitung 74 mit der Druckluftleitung 75 zum Anschluss des ersten Druckluftvorratsbehälters 18 verbunden. Über den Anschluss 100 wird die Druckluftleitung 70 mit der Druckluftleitung 71 zum Anschluss des zweiten Druckluftvorratsbehälters 20 verbunden. Über den Anschluss 102 wird die Druckluftleitung 78 mit der Druckluftleitung 34 zur Verbindung des Relaisventils 64 mit dem Bremszylinder 12 verbunden. Über den Anschluss 104 wird die Druckluftleitung 44 zum Relaisventil 48 über die Anhängersteuerung mit einer Druckluftleitung 108 und somit über die Druckluftleitungen 67 bis 75 mit den Druckluftvorratsbehältern 18, 20 verbunden. Über den Anschluss 106 erfolgt eine Verbindung der Druckluftleitung 62 zum Steuereingang 50 des Relaisventils 48 für die Anhängersteuerung mit einer in dem Feststellbremsmodul 14 angeordneten Ventileinheit 110 zur Steuerung der Anhängerfeststellbremse.

Das Feststellbremsmodul 14 weist ferner einen innerhalb eines Deckels 112 untergebrachten Drucksensor 114 auf, der zur Überwachung des Vorratsdruckes innerhalb des Feststellbremsmoduls 14 dient. Der Drucksensor 114 ist zu diesem Zweck über eine Druckleitung 116 mit der Druckleitung 72 und somit mit den Druckleitungen 66 bis 71, 73 bis 75 sowie 108, 44 und 46 unmittelbar oder mittelbar verbunden.

Im Bereich des Deckels 112 ist ferner die bereits erwähnte elektrische Steuereinheit 40 angeordnet, mittels der über elektrische Leitungen 118, 120 die Ventileinheit 86 sowie die Ventileinheit 110 elektrisch schaltbar sind.

Die beiden im Feststellbremsmodul 14 angeordneten Ventileinheiten 86 bzw. 110 sind - ebenso wie das Relaisventil 48 für den Anhänger und das Relaisventil 64 für das Zugfahrzeug baugleich ausgeführt und in gleicher Weise angeschlossen, wie in Fig. 1 gezeigt. Nachfolgend beschränken wir uns daher auf die Erläuterung der Ventileinheit 86; für die Ventileinheit 110 gilt die Erläuterung der Ventileinheit 86 entsprechend.

Die Ventileinheiten 86 und 110 sind bei einer Ausführungsform als eigenständige Baugruppen ausgeführt. Alternativ sind die Ventileinheiten 86 und 110 jedoch entweder einzeln oder gemeinsam mit dem Relaisventil 64 und ggf. auch mit dem Relaisventil 48 integral in einem einzigen einheitlichen Feststellbremsmodul 14 realisiert. Bei einer Ausbildung der Ventileinheiten 86 bzw. 110 als selbstständige Bauteile weisen die Ventileinheiten nachfolgend näher ausgeführte pneumatische Anschlüsse auf. Sofern die Ventileinheiten jedoch in dem Feststellbremsmodul integriert sind, entfallen derartige Anschlüsse zu Gunsten entsprechender Verbindungsleitungen. In den Patentansprüchen ist daher der generische Begriff "Verbindungsorgan" verwendet, welcher jedwede Verbindungsmittel, d.h. sowohl Anschlüsse als auch anderweitige Verbindungen, wie Verbindungsleitungen, Verbindungskanäle oder -bohrungen und dergleichen mehr umfasst. In der nachfolgenden Beschreibung soll der Begriff "Anschluss" im Zusammenhang mit den Ventileinheiten 86 bzw. 110 somit auch als Verbindungsorgan verstanden werden, um auf diese Weise auch die Ausführungsform zu erläutern, bei der die Ventileinheiten 86 bzw. 110 im Feststellbremsmodul 14 integriert sind.

Die Ventileinheit 86 weist einen ersten Anschluss 122 auf, der über Druckluftleitungen 126, 68 bis 75 mit den Druckluftvorratsbehältern 18, 20 verbunden ist. Die Ventileinheit 86 weist ferner einen zweiten Anschluss 128 auf, der über eine Druckluftleitung 130 mit der Entlüftungseinrichtung 92 verbunden ist. Die Ventileinrichtung 86 weist ferner einen dritten Anschluss 132 auf, der über die Druckluftleitung 84 mit dem Steuereingang 82 des Relaisventils 64 verbunden ist. Die Ventileinheit 86 weist ein Belüftungsventil 133 sowie ein Entlüftungsventil 134 auf. Das Belüftungsventil 133 ist als 2/2-Wege-Magnetventil ausgebildet. Das Entlüftungsventil 134 ist als Doppelankermagnetventil mit drei Schaltzuständen ausgebildet.

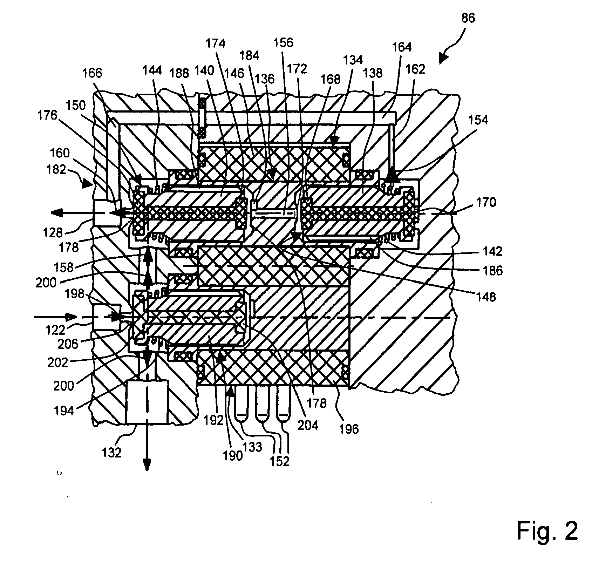

Die konstruktive Ausgestaltung der Ventileinheit 86 ist in Fig. 2 gezeigt. Das Entlüftungsventil 133 weist zwei in einer gemeinsamen Ankerführungsanordnung 136 angeordnete Magnetanker 138, 140 auf. Die Ankerführungsanordnung 136 ist als Ankerführungsrohr ausgebildet, wobei der innere Rohrdurchmesser zumindest abschnittsweise konstant und an die Außendurchmesser der Magnetanker 138, 140 angepasst ist. Ein erster Magnetanker, nämlich der Primäranker 138 ist mittels einer Feder 142 belastet und wird in der Darstellung gemäß Fig. 2 daher nach rechts gedrückt. In entsprechender Weise ist ein zweiter Magnetanker, nämlich der Sekundäranker 140 mit einer Feder 144 belastet, welche den Magnetanker 140 in der in Fig. 2 gezeigten Darstellung nach links drückt. Die Ankerführungsanordnung 136 ist von einer Magnetspule 146 umgeben. Der äußere Durchmesser der Ankerführungsanordnung 136 ist an den inneren Durchmesser der Magnetspule 146 angepasst. Bei Einspeisung geeigneter Magnetströme in die Magnetspule 146 zieht die Magnetspule 146 den Primäranker 138 und ggf. den Sekundäranker 140 in Richtung des Spuleninneren. Der Primäranker 138 ist als Schaltelement für ein erstes Teilventil 148 und der Sekundäranker 140 als Schaltelement für ein zweites Teilventil 150 vorgesehen. Die Ventileinheit 86 weist drei elektrische Anschlüsse 152 auf, die mittels der elektrischen Leitungen 118 mit der elektrischen Steuereinheit 40 verbunden sind. Zwei der drei elektrischen Anschlüsse 152 sind mit der Magnetspule 146 des Entlüftungsventils 134 verbunden.

Bei stromloser Magnetspule 146 befinden sich sowohl der Primäranker 138 als auch der Sekundäranker 140 in ihren durch die Federn 142, 144 bestimmten, in den Fig. 1 bzw. 2 dargestellten Grundstellungen. Das dem Primäranker 138 zugeordnete Teilventil 148 verbindet in seiner Grundstellung einen ersten Auslass 154 des Entlüftungsventils 134 mit einer sich längs der Ankerführungsanordnung 136 erstreckenden Durchführung 156. In einer Schaltstellung dieses Teilventils 148 sperrt der Magnetanker 138 den ersten Auslass 154 von der Durchführung 156 ab. Das zweite Teilventil 150 sperrt in seiner Grundstellung einen Einlass 158 von einem zweiten Auslass 160 ab. In dieser Grundstellung ist ferner die Durchführung 156 mit dem Einlass 158 verbunden, während die Durchführung 156 von dem zweiten Auslass 160 abgesperrt ist. In seiner Schaltstellung verbindet das zweite Teilventil 150 den Einlass 158 des Entlüftungsventils 134 mit dem zweiten Auslass des Entlüftungsventils 160. Der erste Auslass 154 des Entlüftungsventils 134 ist über eine Blende 162 über Kanäle 164, 166 mit dem zweiten Anschluss 128 pneumatisch verbunden. Die Blende 162 wirkt als Drossel und vermindert den Querschnitt der pneumatischen Leitung am ersten Auslass 154 des Entlüftungsventils 134.

Wenn die Magnetspule 146 stromlos ist, befinden sich sowohl der Primäranker 138 als auch der Sekundäranker 140 in ihren gezeigten Grundstellungen. Sofern die Magnetspule 146 mit einem ersten, niedrigen Strom betrieben wird, welcher über die Anschlüsse 152 der ersten Magnetspule 146 zugeführt wird, gelangt der Primäranker 138 in seine Schaltstellung, d.h. wird in Richtung des Inneren der Magnetspule 146 hineingezogen. Wenn der durch die Magnetspule 146 fließende Strom weiter erhöht wird, gelangt auch der Sekundäranker 140 in seine Schaltstellung, d.h. wird in Richtung des Inneren der Magnetspule hineingezogen.

An beiden Enden des Primärankers 138, zumindest aber an dem der Durchführung 156 zugewandten Ende des Primärankers 138 befinden sich Elastomereinsätze 168, 170. Die Elastomereinsätze 168, 170 können auch einstückig ausgebildet sein, indem der Primäranker 138 eine durchgängige Bohrung aufweist, durch welche sich ein entsprechend einstückig ausgebildeter Elastomereinsatz hindurchzieht. Der Elastomereinsatz 168, der der Durchführung 156 zugewandt ist, bildet mit einer entsprechenden Ausformung 172 an der Ankerführungsanordnung 136 einen Ventilsitz.

Der Sekundäranker 140 weist an seinen beiden Enden jeweils einen Elastomereinsatz 174, 176 auf. Auch diese Elastomereinsätze können entweder separat oder, wie in Fig. 2 dargestellt, einstückig ausgebildet sein. Im Falle einer einstückigen Ausbildung tritt der Elastomereinsatz durch eine durch den Sekundäranker 140 hindurchtretende Durchführung durch. Die an beiden Enden des Sekundärankers 140 hervortretenden Elastomereinsätze 174, 176 bilden mit entsprechenden Ausformungen 178 an einem Ventilkopf 182 bzw. an der Ankerführungsanordnung 136 Ventilsitze. Mittels der Elastomereinsätze 174, 176 und der genannten Ausformungen 178, 180 können der zweite Auslass 160 des Entlüftungsventils 134 bzw. die Durchführung 156 abgesperrt werden. Aufgrund einer Ausnehmung 184 im Bereich der Ausformung 178 an der Ankerführungsanordnung 136 verbleibt der Ventilsitz zwischen Elastomereinsatz und Ausformung 178 stets geöffnet. Diese Ausnehmung 184 kann jedoch auch entfallen. In diesem Falle würde in der Schaltstellung des Sekundärankers 140 der Elastomereinsatz 174 die Ausformung 178 vollständig verschließen. Der Primäranker 138 und der Sekundäranker 140 sind jeweils im Wesentlichen rotationssymmetrisch ausgebildet. Sie weisen jedoch jeweils eine sich längs des jeweiligen Ankers erstreckende nutartige Ausnehmung 186, 188 auf. Die Ausnehmung 186 des Primärankers schafft eine Verbindung zwischen dem ersten Auslass 154 des Entlüftungsventils 134 und der Durchführung 156, wenn sich der Primäranker 138 in seiner Grundstellung befindet. Die Ausnehmung 188 des Sekundärankers 140 schafft eine Verbindung zwischen der Ausnehmung 184 bzw. der Durchführung 156 und dem Einlass 158 bzw. dem zweiten Auslass 160 des Entlüftungsventils, wenn sich der Sekundäranker 140 in seiner Schaltstellung befindet.

Innerhalb der Ventileinheit 86 ist ferner das Belüftungsventil 133 ausgebildet. Es weist einen in einer weiteren Ankerführungsanordnung 190 angeordneten Magnetanker 192 auf. Die Ankerführungsanordnung 190 weist einen rohrförmigen Abschnitt auf, wobei der innere Durchmesser dieses rohrförmigen Abschnitts an den Außendurchmesser des Magnetankers 192 angepasst ist. Der Magnetanker 192 ist mittels einer Feder 194 belastet und wird in der Darstellung gemäß Fig. 2 nach links gedrückt. Die Ankerführungsanordnung 190 ist von einer Magnetspule 196 umgeben. Der äußere Durchmesser der Ankerführungsanordnung 190 ist an den inneren Durchmesser der Magnetspule 196 angepasst. Bei Einspeisung eines Magnetstroms einer vorbestimmten Größe in die Magnetspule 196 zieht die Magnetspule 196 den Magnetanker 192 in Richtung des Spuleninneren. Dieser Magnetanker 192 ist als Schaltelement für das Belüftungsventil 133 vorgesehen. Die Magnetspule 196 weist zwei elektrische Anschlüsse 152 auf, wobei einer der beiden Anschlüsse mit einem der beiden Anschlüsse der Magnetspule 146 zusammenfällt. Daher genügen für die Ventileinheit 86 insgesamt drei Anschlüsse 152, um sowohl die Magnetspule 146 des Entlüftungsventils 134 als auch die Magnetspule 196 des Belüftungsventils 133 elektrisch anzuschießen. Alle drei Anschlüsse 152 sind mittels der elektrischen Leitungen 118 mit der elektrischen Steuereinheit 40 verbunden.

Bei stromloser Magnetspule 196 befindet sich der Magnetanker 192 in seiner durch die Feder 194 in den Fig. 1 bzw. 2 darstellten Grundstellung. Das Belüftungsventil 133 sperrt in seiner Grundstellung seinen Einlass 198 und damit den mit diesem Einlass 198 pneumatisch verbundenen ersten Anschluss 122 der Ventileinheit 86 gegen den Auslass 200 des Belüftungsventils 133 ab. Der Auslass 200 ist einerseits mit dem dritten Anschluss 132 der Ventileinheit 86 verbunden, der zum Steuereingang 82 des Relaisventils 64 führt. Andererseits ist der Auslass 200 auch mit dem Einlass 158 des Entlüftungsventils 135 verbunden.

Bei Einspeisung eines Stromes einer vorbestimmten Größe in die Magnetspule 196 wird der Magnetanker 192 in seine Schaltstellung versetzt. Dabei wird der Einlass 198 und somit der erste Anschluss 122 der Ventileinheit 86 mit dem Auslass 200 des Belüftungsventils 133 verbunden. Auf diese Weise kann Druckluft über die Druckluftleitungen 68 bis 75, 84, 126 von den Druckluftvorratsbehältern 18, 20 an den Steuereingang 82 des Relaisventils 64 geführt werden. Sofern der Magnetanker 192 in seiner Grundstellung verbleibt, kann, wenn auch der Einlass 158 des Entlüftungsventils 134 von seinen Auslässen 154, 160 abgesperrt ist, der Druck am Steuereingang 82 des Relaisventils 64 gehalten werden. Wenn hingegen der Druck am Steuereingang 82 des Relaisventils 64 abfallen soll, ist das Belüftungsventil 133 unbestromt, so dass sich der Magnetanker 192 in seiner Grundstellung befindet; damit ist der Einlass 198 vom Auslass 200 des Belüftungsventils 133 abgesperrt. Das Entlüftungsventil 134 verbindet zum Entlüften des Steuereingangs 82 des Relaisventils 64 seinen Einlass 158 mit einem seiner beiden Auslässe 154 bzw. 160, je nachdem ob eine langsame Entlüftung des Steuereingangs 82 des Relaisventils 64 oder eine schlagartige Entlüftung stattfinden soll.

An beiden Enden des Magnetankers 192, zumindest aber an dem dem Einlass 198 zugeordneten Ende befindet sich (jeweils) ein Elastomereinsatz 202, 204. Die Elastomereinsätze 202, 204 können auch einstückig ausgebildet sein, indem der Magnetanker 192 eine durchgängige Bohrung aufweist, durch welche sich der Elastomereinsatz hindurchzieht. Der dem Einlass 198 des Belüftungsventils 133 zugeordnete Elastomereinsatz 202 bildet mit einer Ausformung 206 an dem Ventilkopf 182 einen Ventilsitz.

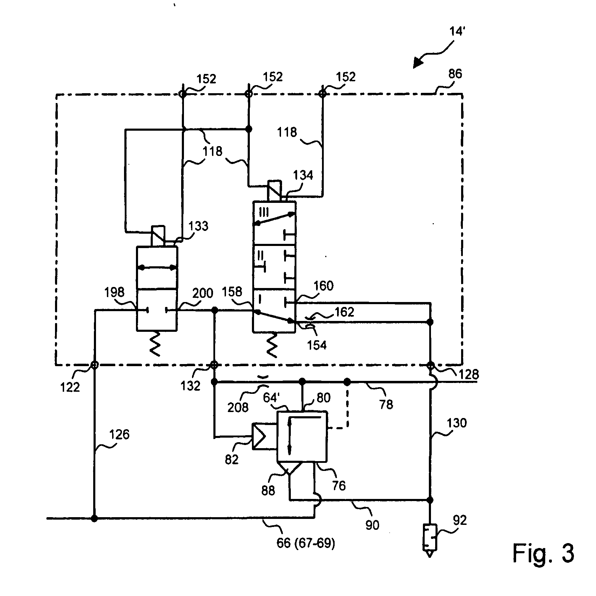

Fig. 3 zeigt ein weiteres Ausführungsbeispiel eines Feststellbremsmoduls 14', das weitgehend dem in Fig. 1 gezeigten Feststellbremsmodul 14 entspricht. Das in Fig. 3 gezeigte Feststellbremsmodul 14' zeigt jedoch lediglich die Ventileinheit 86 für das Zugfahrzeug, während die Ventileinheit 110 für den Anhänger nicht dargestellt ist. In Fig. 3 bezeichnen daher gleiche Bezugsziffern gleiche Teile wie in Fig. 1 bzw. Fig. 2. Es wird daher auf die obigen Ausführungen verwiesen.

In bestimmten Fahrsituationen, z.B. bei einem Ausfall der elektrischen Energieversorgung, soll der Federspeicherteil 30 langsam über die Blende 162 entlüftet werden. Da jedoch das Steuervolumen des Relaisventils 64 bzw. 64' sehr klein ist, darf eine Entlüftung des Steuereingangs 82 des Relaisventils 64, 64' nur über eine sehr kleine Blende 162 erfolgen. Daher wäre die Blende 162 an sich mit einem sehr kleinen Durchmesser auszugestalten. Ein sehr kleiner Durchmesser birgt jedoch die Gefahr, dass er durch Verschmutzung oder Vereisung verstopft. Durch Verschmutzung oder Vereisung könnte jedoch die gedrosselte Entlüftung wirkungslos werden und somit ein sicheres Entlüften des Federspeicherteils 30 der Federspeicherbremszylinder nicht mehr gewährleistet sein. Um gleichwohl ein langsames Entlüften bei einem ausreichend großen Querschnitt der Blende 162 zu ermöglichen, wird das Steuervolumen des Relaisventils scheinbar, d.h. virtuell dadurch vergrößert, dass eine Verbindung zwischen dem Steuereingang 82 und dem Auslass 80 des Relaisventils 64' geschaffen wird. Diese Verbindung ist bspw. in Form einer eine Blende 208 bildenden Durchbohrung des Relaiskolbens ausgebildet. Diese Blende 208 vergrößert die zu entlüftende Luftmenge im Steuerraum des Relaisventils 64'. Auf diese Weise kann trotz einer ausreichend großen Öffnung der Blende 162 - um die Gefahr einer Verschmutzung oder Vereisung zu reduzieren - das Arbeitsvolumen am Steuereingang 82 des Relaisventils 64' ausreichend langsam entlüftet werden.

Die Blende 208 des Relaiskolbens des Relaisventils 64' weist vorteilhafterweise eine größere Querschnittsfläche als die Querschnittsfläche der Blende 162 der Ventileinheit 86 auf. Auf diese Weise entspricht der Druck am Steuereingang 82 des Relaisventils 64' im Wesentlichen dem Druck am Auslass 80 des Relaisventils 64'. Eine Entlüftung des Federspeicherteils 30 findet somit nicht mehr oder nur zu einem unwesentlichen Teil über den Entlüftungsanschluss 88 des Relaisventils 64' statt. Vielmehr wird im Wesentlichen das gesamte Volumen des Federspeicherteils 30 sowie das Steuervolumen am Steuereingang 82 des Relaisventils 64' über die Blende 162 entlüftet und zwar wegen der geringen Öffnung der Blende 162 ausreichend langsam.

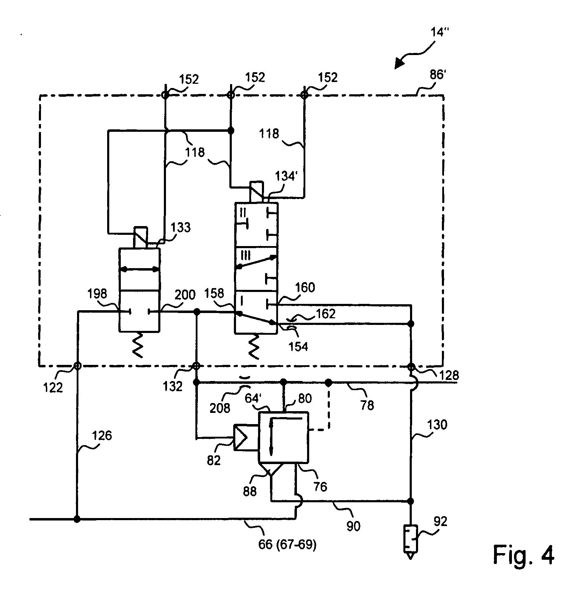

Fig. 4 zeigt ein weiteres Ausführungsbeispiel eines Feststellbremsmoduls 14". Das in Fig. 4 gezeigte Feststellbremsmodul 14" zeigt jedoch eine von den bisherigen Ausführungsbeispielen abweichende Ausführung des Entlüftungsventils 134'. Im Übrigen entspricht aber das Feststellbremsmodul 14" und somit auch die Ventileinheit 86' dem in Fig. 3 gezeigten Feststellbremsmodul 14' bzw. der Ventileinheit 86. Daher bezeichnen gleiche Bezugsziffern gleiche Teile und es wird auf die obigen Ausführungen verwiesen.

Eine Besonderheit der Ventileinheit 86' besteht in der unterschiedlichen Ausbildung des Entlüftungsventils 134', bei dem der zweite Zustand II und der dritte Zustand III gegeneinander vertauscht sind. Der erste Zustand I bleibt jedoch unverändert. Diese Zustandsvertauschung führt dazu, dass im Falle einer Einspeisung eines ersten niedrigen Magnetstroms in die Magnetspule des Entlüftungsventils 134' eine schlagartige Entlüftung des Steuereingangs 82 des Relaisventils 64, 64' erfolgt und damit die Feststellbremse schlagartig eingelegt wird. Erst bei Bestromung des Entlüftungsventils 134' mit einem höheren Strom ist der Einlass 158 des Entlüftungsventils 134' gegen seine Auslässe 154, 160 abgesperrt.

Zwar scheint diese Ausführungsform im Falle eines Stromausfalls den ersten Zustand I des Entlüftungsventils 134' erst nach kurzzeitigem Einschalten des dritten Zustandes III einzustellen. Da jedoch das Entlüftungsventil 134' als Doppelankermagnetventil ausgebildet ist, werden im Falle einer Stromlosschaltung der Spule des Entlüftungsventils 134' sowohl der Primäranker als auch der Sekundäranker des Entlüftungsventils 134' im Wesentlichen zeitgleich jeweils in ihre Grundstellungen geschaltet. Insofern ist die Zeitdauer, in der der dritte Zustand III bei der in Fig. 4 gezeigten Ausführungsform aktiv ist, vernachlässigbar und spielt für den Entlüftungsvorgang des Steuereingangs 82 des Relaisventils 64' keine signifikante Rolle.

Aufgrund des erfindungsgemäßen Doppelankermagnetventils für das Entlüftenventil mit einer Blende für langsames Entlüften und einem Auslass für schnelles Entlüften wird eine Ventileinheit bereitgestellt, die im Aufbau einfach und kostengünstig ausgestaltet ist und zugleich ein sicheres Abstellen des Fahrzeugs selbst bei einem Ausfall der elektrischen Energieversorgung gewährleistet.

Durch das zwischen den Steuereingang des Relaisventils und den Druckluftvorrat geschaltete Belüftungsventil sowie das zwischen den Steuereingang des Relaisventils und eine Entlüftungseinrichtung geschaltete Entlüftungsventil kann durch geeignete Öffnungszeiten der beiden Ventile nahezu jeder beliebige Druckwert bis zur Höhe des Druckes in den Vorratsbehältern am Steuereingang des Relaisventils angelegt werden. Da zum Lösen der Feststellbremsen die Federspeicherbremszylinder nicht mit dem vollen Vorratsdruck beaufschlagt werden müssen, kann somit am Steuereingang des Relaisventils auch ein niedrigerer Druck vorgegeben werden, der dann entsprechend dem Federspeicherteil der Federspeicherbremszylinder zugeführt wird. Auf diese Weise kann mittels der beiden Ventile, nämlich des Belüftungsventils und des Entlüftungsventils auch eine Druckbegrenzungsfunktion am Steuereingang des Relaisventils und somit auch in den Federspeicherbremszylindern realisiert werden. Eine derartige Druckbegrenzung ist sowohl für den Energieverbrauch bzw. den Verbrauch an Druckluft als auch für die beim Entlüften auftretende Geräuschemission vorteilhaft.

Insgesamt ermöglicht die Erfindung eine einfache Realisierung einer Feststellbremse, die einen sicheren Zustand auch bei Ausfall der elektrischen Energieversorgung gewährleistet und zudem auf rein elektrischem Wege betätigt werden kann; insbesondere kann die oftmals bisher übliche pneumatische Verrohrung im Fahrerhaus zur Aktivierung der Feststellbremse entfallen und vollständig eine Bedienung der Feststellbremse über ein elektrisches Betätigungsorgan erreicht werden.

## Patentansprüche

1. Ventileinheit für eine elektropneumatische Bremssteuerungseinrichtung (14) zur Steuerung einer luftmengenverstärkenden Ventileinrichtung (64) zur Steuerung einer Feststellbremse eines Fahrzeugs, wobei die Ventileinheit (86) ein Entlüftungsventil (134) zur Entlüftung eines Steuereingangs (82) der luftmengenverstärkenden Ventileinrichtung (64) aufweist, **dadurch gekennzeichnet, dass** das Entlüftungsventil (134) ein Ventil mit drei Zuständen (I, II, III) ist, das derart ausgebildet ist, dass in einem ersten Zustand (I) der Steuereingang (82) der luftmengenverstärkenden Ventileinrichtung (64) über eine Blende (162) gedrosselt entlüftbar ist, dass in einem zweiten Zustand (II) der Steuereingang (82) der luftmengenverstärkenden Ventileinrichtung (64) nicht entlüftbar ist und dass in einem dritten Zustand (III) der Steuereingang (82) der luftmengenverstärkenden Ventileinrichtung (64) ungedrosselt entlüftbar ist.

2. Ventileinheit nach Anspruch 1, **dadurch gekennzeichnet, dass** das Entlüftungsventil (134) als Doppelankermagnetventil ausgebildet ist mit zwei in einer gemeinsamen Ankerführungsanordnung (136) angeordneten und mit je einer Feder (142, 144) belasteten Magnetankern, nämlich einem Primäranker (138) und einem Sekundäranker (140), welche jeweils durch eine für beide Magnetanker (138, 140) vorgesehene Magnetspule (146) betätigbar sind.

3. Ventileinheit nach Anspruch 2, **dadurch gekennzeichnet, dass** das Doppelankermagnetventil (134) einen mit dem Steuereingang (82) der luftmengenverstärkenden Ventileinrichtung (64) verbindbaren und dem Sekundäranker (140) zugeordneten Einlass (158), einen mit einer Entlüftungseinrichtung (92) verbindbaren und dem Primäranker (138) zugeordneten ersten Auslass (154) sowie einen mit der Entlüftungseinrichtung (92) verbindbaren und dem Sekundäranker (140) zugeordneten zweiten Auslass (160) aufweist, wobei der erste Auslass (154) über die Blende gedrosselt mit der Entlüftungseinrichtung (92) verbindbar ist und wobei der zweite Auslass (160) ungedrosselt mit der Entlüftungseinrichtung (92) verbindbar ist.

4. Ventileinheit nach Anspruch 2 oder 3, **dadurch gekennzeichnet, dass**
a) sich bei stromloser Magnetspule (146) der Primäranker (138) und der Sekundäranker (140) in ihren durch die Federbelastung festgelegten Grundstellungen befinden, in denen das Entlüftungsventil (134) seinen ersten Zustand (I) einnimmt und dabei seinen Einlass (158) mit seinem ersten Auslass (154) verbindet und den Einlass (158) von seinem zweiten Auslass (160) absperrt,
b) durch Einspeisung eines die Magnetspule (146) durchfließenden ersten Magnetstroms einer vorbestimmten Stärke ist der Primäranker (138) in seine durch die Magnetkraft bestimmte Schaltstellung versetzt, während sich der Sekundäranker (140) in der federbelasteten Grundstellung befindet, so dass das Entlüftungsventil (134) seinen zweiten Zustand (II) einnimmt und dabei seinen Einlass (158) von dem ersten Auslass (154) und dem zweiten Auslass (160) absperrt, und
c) durch Einspeisung eines die Magnetspule (146) durchfließenden zweiten Magnetstroms einer vorbestimmten Stärke, welcher um einen vorbestimmten Betrag größer ist als der erste Magnetstrom, sind sowohl der Primäranker (138) als auch der Sekundäranker (140) in ihre durch die Magnetkraft bestimmten Schaltstellungen versetzt, so dass das Entlüftungsventil (134) seinen dritten Zustand (III) einnimmt und dabei seinen Einlass (158) mit seinem zweiten Auslass (160) verbindet und insbesondere seinen Einlass (158) von seinem ersten Auslass (154) absperrt.

5. Ventileinheit nach Anspruch 2 oder 3, **dadurch gekennzeichnet, dass**
a) sich bei stromloser Magnetspule der Primäranker und der Sekundäranker in ihren durch die Federbelastung festgelegten Grundstellungen befinden, in denen das Entlüftungsventil (134') seinen ersten Zustand (I) einnimmt und dabei seinen Einlass (158) mit seinem ersten Auslass (154) verbindet und den Einlass (158) von seinem zweiten Auslass (160) absperrt,
b) durch Einspeisung eines die Magnetspule durchfließenden ersten Magnetstroms einer vorbestimmten Stärke ist der Primäranker in seine durch die Magnetkraft bestimmte Schaltstellung versetzt, während sich der Sekundäranker in der federbelasteten Grundstellung befindet, so dass das Entlüftungsventil (134') seinen dritten Zustand (III) einnimmt und dabei seinen Einlass (158) mit seinem zweiten Auslass (160) verbindet und seinen Einlass (158) von seinem ersten Auslass (154) absperrt, und
c) durch Einspeisung eines die Magnetspule durchfließenden zweiten Magnetstroms einer vorbestimmten Stärke, welcher um einen vorbestimmten Betrag größer ist als der erste Magnetstrom, sind sowohl der Primäranker als auch der Sekundäranker in ihre durch die Magnetkraft bestimmten Schaltstellungen versetzt, so dass das Entlüftungsventil (134') seinen zweiten Zustand (II) einnimmt und dabei seinen Einlass (158) von seinem ersten Auslass (154) und seinem zweiten Auslass (160) absperrt.

6. Ventileinheit nach einem der Ansprüche 2 bis 5, **dadurch gekennzeichnet, dass** die von der dem Primäranker (138) zugeordneten Feder (142) auf den Primäranker (138) ausgeübte Federkraft geringer ist als die von der dem Sekundäranker (140) zugeordneten Feder (144) auf den Sekundäranker (140) ausgeübten Federkraft.

7. Ventileinheit nach einem der Ansprüche 2 bis 6, **dadurch gekennzeichnet, dass** der Primäranker (138) und der Sekundäranker (140) unterschiedliche Durchmesser aufweisen, insbesondere der Sekundäranker (140) einen kleineren Durchmesser aufweist als der Primäranker (138).

8. Ventileinheit nach einem der Ansprüche 2 bis 6, **dadurch gekennzeichnet, dass** der Primäranker (138) und der Sekundäranker (140) baugleich ausgeführt sind.

9. Ventileinheit nach einem der Ansprüche 2 bis 8, **dadurch gekennzeichnet, dass** der Primäranker (138) und der Sekundäranker (140) unterschiedlich tief in die Magnetspule (146) eintauchen, insbesondere der Primäranker (138) tiefer in die Magnetspule (146) eintaucht als der Sekundäranker (140).

10. Ventileinheit nach einem der Ansprüche 3 bis 9, **dadurch gekennzeichnet, dass** die Ventileinheit (86) ein Belüftungsventil (133) mit einem Einlass (198) und einem Auslass (200) aufweist, wobei
a) der Einlass (198) des Belüftungsventils (133) mit einem mit einem Druckluftvorrat (18, 20) verbindbaren ersten Verbindungsorgan (122),
b) der erste Auslass (154) des Entlüftungsventils (134) über die Blende (162) und der zweite Auslass (160) des Entlüftungsventils (134) mit einem mit der Entlüftungseinrichtung (92) verbindbaren zweiten Verbindungsorgan (128) und
c) der Auslass (200) des Belüftungsventils (133) mit dem Einlass (158) des Entlüftungsventils (134) und mit einem mit dem Steuereingang (82) der luftmengenverstärkenden Ventileinrichtung (64) verbindbaren dritten Verbindungsorgan (132)
verbunden ist.

11. Elektropneumatische Bremssteuerungseinrichtung zur Steuerung einer Feststellbremse eines Fahrzeugs, bei dem druckluftbetätigbare Bremszylinder (12) zur Betätigung von Radbremsen vorgesehen sind, wobei wenigstens ein Bremszylinder als Federspeicherbremszylinder (12) ausgebildet ist und der Federspeicherteil (30) des Federspeicherbremszylinders (12) die Feststellbremse betätigt, mit wenigstens einer Ventileinheit (86) nach einem der Ansprüche 1 bis 10, wobei das dritte Verbindungsorgan (132) der Ventileinheit (86) mit dem pneumatischen Steuereingang (82) der luftmengenverstärkenden Ventileinrichtung (64) verbunden ist und wobei die luftmengenverstärkende Ventileinrichtung (64) einen mit einer Druckluftzufuhrleitung zum Druckluftvorrat (18; 20) verbundenen Einlass (76) und einen mit einer Druckluftleitung zum Federspeicherteil (30) des Federspeicherbremszylinders (12) verbundenen Auslass (80) aufweist, wobei mittels des am Steuereingang (82) anlegbaren Steuerdrucks der Druck am Auslass (80) der luftmengenverstärkenden Ventileinrichtung (64) steuerbar ist.

12. Bremssteuerungseinrichtung nach Anspruch 11, **dadurch gekennzeichnet, dass** die luftmengenverstärkende Ventileinrichtung ein Relaisventil (64) ist, dessen Relaiskolben eine Öffnung aufweist, welche den Auslass des Relaisventils mit dem Steuereingang des Relaisventils gedrosselt verbindet.

13. Bremssteuerungseinrichtung nach Anspruch 12, **dadurch gekennzeichnet, dass** die Öffnung eine Blende (208) ist, die eine größere Querschnittsfläche als die Querschnittsfläche der Blende (162) der Ventileinheit (86) aufweist.

14. Elektrisch gesteuerte pneumatische Fahrzeugbremsanlage mit einer Betriebsbremse und einer Feststellbremse, wobei die Betriebsbremse ein Bremspedal (22) und in Wirkverbindung mit dem Bremspedal (22) stehende druckluftbetätigbare Bremszylinder (12) aufweist, wobei wenigstens ein Bremszylinder als Federspeicherbremszylinder (12) ausgebildet ist und der Federspeicherteil (30) des Federspeicherbremszylinders (12) die Feststellbremse betätigt, und wobei die Feststellbremse einen Feststellbremssignalgeber (36) zum Betätigen der Feststellbremse durch Entlüften des Federspeicherteils (30) des Federspeicherbremszylinders (12) aufweist, wobei die Fahrzeugbremsanlage eine Bremssteuerungseinrichtung zur Steuerung der Feststellbremse nach einem der Ansprüche 11 bis 13 aufweist.

15. Fahrzeug mit einer elektrisch gesteuerten pneumatischen Bremsanlage nach Anspruch 14.

## Claims

1. Valve unit for an electro-pneumatic brake control apparatus (14) for controlling an air-quantity-boosting valve apparatus (64) for controlling a parking brake of a vehicle, the valve unit (86) having a deaerating valve (134) for deaerating a control input (82) of the air-quantity-boosting valve apparatus (64), **characterized in that** the deaerating valve (134) is a valve having three states (I, II, III), which is implemented in such a manner that in a first state (I), the control input (82) of the air-quantity-boosting valve apparatus (64) can be deaerated in a throttled manner via a screen (162), in a second state (II), the control input (82) of the air-quantity-boosting valve apparatus (64) cannot be deaerated, and in a third state (III), the control input (82) of the air-quantity-boosting valve apparatus (64) can be deaerated in an unthrottled manner.

2. Valve unit according to Claim 1, **characterized in that** the deaerating valve (134) is formed as a double-armature solenoid valve having two magnetic armatures situated in a common armature guide configuration (136) and each loaded with one spring (142, 144), namely a primary armature (138) and a secondary armature (140), which can each be actuated by a magnetic coil (146) provided for both magnetic armatures (138, 140).

3. Valve unit according to Claim 2, **characterized in that** the double armature solenoid valve (134) has an intake (158), which is connectable to the control input (82) of the air-quantity-boosting valve apparatus (64) and is associated with the secondary armature (140), a first outlet (154), which is connectable to a deaerating apparatus (92) and is associated with the primary armature (138), and a second outlet (160), which is connectable to the deaerating apparatus (92) and is associated with the secondary armature (140), the first outlet (154) being connectable to the deaerating apparatus (92) in a throttled manner via the screen, and the second outlet (160) being connectable to the deaerating apparatus (92) in an unthrottled manner.

4. Valve unit according to Claim 2 or 3, **characterized in that**
a) if the magnetic coil (146) is de-energized, the primary armature (138) and the secondary armature (140) are in their basic positions, which are established by the spring loading, in which the deaerating valve (134) assumes its first state (I) and connects its intake (158) to its first outlet (154) and blocks the intake (158) from its second outlet (160),
b) by feeding a first magnetic current, which permeates the magnetic coil (146), of a predetermined strength, the primary armature (138) is put into its switch position determined by the magnetic force, while the secondary armature (140) is in the spring-loaded basic position, so that the deaerating valve (134) assumes its second state (II) and blocks its intake (158) from the first outlet (154) and the second outlet (160), and
c) by feeding a second magnetic current, which permeates the magnetic coil (146), of a predetermined strength, which is greater than the first magnetic current by a predetermined absolute value, both the primary armature (138) and also the secondary armature (140) are put into their switch positions determined by the magnetic force, so that the deaerating valve (134) assumes its third state (III) and connects its intake (158) to its second outlet (160) and particularly blocks its intake (158) from its first outlet (154).

5. Valve unit according to Claim 2 or 3, **characterized in that**
a) if the magnetic coil is de-energized, the primary armature and the secondary armature are in their basic positions, which are established by the spring loading, in which the deaerating valve (134') assumes its first state (I) and connects its intake (158) to its first outlet (154) and blocks the intake (158) from its second outlet (160),
b) by feeding a first magnetic current, which permeates the magnetic coil, of a predetermined strength, the primary armature is put into its switch position determined by the magnetic force, while the secondary armature is in the spring-loaded basic position, so that the deaerating valve (134') assumes its third state (III) and connects its intake (158) to its second outlet (160) and blocks its intake (158) from its first outlet (154), and
c) by feeding a magnetic current, which permeates the magnetic coil, of a predetermined strength, which is greater than the first magnetic current by a predetermined absolute value, both the primary armature and also the secondary armature are put into their switch positions determined by the magnetic force, so that the deaerating valve (134') assumes its second state (II) and blocks its intake (158) from its first outlet (154) and its second outlet (160).

6. Valve unit according one of Claims 2 to 5, **characterized in that** the spring force exerted on the primary armature (138) by the spring (142) associated with the primary armature (138) is less than the spring force exerted on the secondary armature (140) by the spring (144) associated with the secondary armature (140).

7. Valve unit according to one of Claims 2 to 6, **characterized in that** the primary armature (138) and the secondary armature (140) have different diameters, in particular, the secondary armature (140) has a smaller diameter than the primary armature (138).

8. Valve unit according to one of Claims 2 to 6, **characterized in that** the primary armature (138) and the secondary armature (140) are implemented having identical constructions.

9. Valve unit according to one of Claims 2 to 8, **characterized in that** the primary armature (138) and the secondary armature (140) plunge to different depths in the magnetic coil (146), in particular, the primary armature (138) plunges deeper into the magnetic coil (146) than the secondary armature (140).

10. Valve unit according to one of Claims 3 to 9, **characterized in that** the valve unit (86) has an aerating valve (133) having an intake (198) and an outlet (200),
a) the intake (198) of the aerating valve (133) is connected to a first connection element (122), which is connectable to a compressed air supply (18, 20),
b) the first outlet (154) of the deaerating valve (134) is connected via the screen (162) and the second outlet (160) of the deaerating valve (134) to a second connection element (128), which is connectable to the deaerating apparatus (92), and
c) the outlet (200) of the aerating valve (133) is connected to the intake (158) of the deaerating valve (134) and to a third connection element (132), which is connectable to the control input (82) of the air-quantity-boosting valve apparatus (64).

11. Electro-pneumatic brake control apparatus for controlling a parking brake of a vehicle, in which brake cylinders (12), which can be actuated by compressed air, are provided for actuating wheel brakes, at least one brake cylinder being formed as a spring-type cumulator brake cylinder (12) and the spring-type cumulator part (30) of the spring-type cumulator brake cylinder (12) actuating the parking brake, having at least one valve unit (86) according to one of Claims 1 to 10, the third connection element (132) of the valve unit (86) being connected to the pneumatic control input, (82) of the air-quantity-boosting valve apparatus (64), and the air-quantity-boosting valve apparatus (64) having an intake (76) connected to a compressed air feed line to the compressed air supply (18; 20) and an outlet (80) connected to a compressed air line to the spring-type cumulator part (30) of the spring-type cumulator brake cylinder (12), the pressure at the outlet (80) of the air-quantity-boosting valve apparatus (64) being controllable using the control pressure which can be applied at the control input (82).

12. Brake control apparatus according to Claim 11, **characterized in that** the air-quantity-boosting valve apparatus is a relay valve (64), whose relay piston has an opening, which connects the outlet of the relay valve to the control input of the relay valve in a throttled manner.

13. Brake control apparatus according to Claim 12, **characterized in that** the opening is a screen (208), which has a greater cross-sectional area than the cross-sectional area of the screen (162) of the valve unit (86).

14. Electrically controlled pneumatic vehicle brake system having an operating brake and a parking brake, the operating brake having a brake pedal (22) and brake cylinders (12), which are operationally linked to the brake pedal (22) and can be actuated by compressed air, at least one brake cylinder being formed as a spring-type actuator brake cylinder (12) and the spring-type actuator part (30) of the spring-type actuator brake cylinder (12) actuating the parking brake, and the parking brake having a parking brake signal generator (36) for actuating the parking brake, by deaerating the spring-type actuator part (30) of the spring-type actuator brake cylinder (12), the vehicle brake system having a brake control apparatus for controlling the parking brake according to one of Claims 11 to 13.

15. Vehicle having an electrically controlled pneumatic brake system according to Claim 14.

## Revendications

1. Unité de soupape pour un dispositif de commande de freinage électropneumatique (14) pour commander un dispositif de soupape (64) augmentant la quantité d'air pour la commande d'un frein de stationnement d'un véhicule, l'unité de soupape (86) présentant une soupape de purge (134) pour purger une entrée de commande (82) du dispositif de soupape (64) augmentant la quantité d'air, **caractérisée en ce que** la soupape de purge (134) est une soupape avec trois états. (I, II, III) qui est réalisée de telle sorte que dans un premier état (I), l'entrée de commande (82) du dispositif de soupape (64) augmentant la quantité d'air puisse être purgée de manière étranglée par le biais d'un diaphragme (162), que dans un deuxième état (II), l'entrée de commande (82) du dispositif de soupape (64) augmentant la quantité d'air ne puisse pas être purgée, et que dans un troisième état (III), l'entrée de commande (82) du dispositif de soupape (64) augmentant la quantité d'air puisse être purgée sans étranglement.

2. Unité de soupape selon la revendication 1, **caractérisée en ce que** la soupape de purge (134) est réalisée sous forme d'électrovanne à double armature, avec deux armatures d'aimant disposées dans un agencement de guidage d'armature commun (136) et sollicitées chacune par un ressort (142, 144), à savoir une armature primaire (138) et une armature secondaire (140), qui peuvent être actionnées à chaque fois par une bobine magnétique (146) prévue pour les deux armatures d'aimant (138, 140).

3. Unité de soupape selon la revendication 2, **caractérisée en ce que** l'électrovanne à double armature (134) présente une entrée (158) pouvant être connectée à l'entrée de commande (82) du dispositif de soupape (64) augmentant la quantité d'air et associée à l'armature secondaire (140), une première sortie (154) pouvant être connectée au dispositif de purge (92) et associée à l'armature primaire (138), ainsi qu'une deuxième sortie (160) pouvant être connectée au dispositif de purge (92) et associée à l'armature secondaire (140), la première sortie (154), étranglée par le biais du diaphragme, pouvant être connectée au dispositif de purge (92), et la deuxième sortie (160) pouvant être connectée au dispositif de purge (92) sans étranglement.

4. Unité de soupape selon la revendication 2 ou 3, **caractérisée en ce que**
a) lorsque la bobine magnétique (146) n'est pas parcourue par un courant, l'armature primaire (138) et l'armature secondaire (140) se trouvent dans leurs positions de base fixées par la contrainte du ressort, dans lesquelles la soupape de purge (134) adopte son premier état (I) et relie ainsi son entrée (158) à sa première sortie (154), et bloque l'entrée (158) de sa deuxième sortie (160),
b) par injection d'un premier flux magnétique d'une intensité prédéterminée traversant la bobine magnétique (146), l'armature primaire (138) est amenée dans sa position de commutation déterminée par la force magnétique, tandis que l'armature secondaire (140) se trouve dans la position de base sollicitée par ressort, de sorte que la soupape de purge (134) adopte son deuxième état (II) et bloque ainsi son entrée (158) de la première sortie (154) et de la deuxième sortie (160), et
c) par injection d'un deuxième flux magnétique d'une intensité prédéterminée traversant la bobine magnétique (146), qui est supérieur au premier flux magnétique d'une valeur prédéterminée, à la fois l'armature primaire (138) et l'armature secondaire (140) sont amenées dans leurs positions de commutation déterminées par la force magnétique, de sorte que la soupape de purge (134) adopte son troisième état (III) et relie ainsi son entrée (158) à sa deuxième sortie (160) et bloque notamment son entrée (158) de sa première sortie (154).

5. Unité de soupape selon la revendication 2 ou 3, **caractérisée en ce que**
a) lorsque la bobine magnétique n'est pas parcourue par un courant, l'armature primaire et l'armature secondaire se trouvent dans leurs positions de base fixées par la contrainte du ressort, dans lesquelles la soupape de purge (134') adopte son premier état (I) et relie ainsi son entrée (158) à sa première sortie (154); et bloque l'entrée (158) de sa deuxième sortie (160),
b) par injection d'un premier flux magnétique d'une intensité prédéterminée traversant la bobine magnétique, l'armature primaire est amenée dans sa position de commutation déterminée par la force magnétique, tandis que l'armature secondaire se trouve dans la position de base sollicitée par ressort, de sorte que la soupape de purge (134') adopte son troisième état (III) et relie en l'occurrence son entrée (158) à sa deuxième sortie (160) et bloque son entrée (158) de sa première sortie (154), et
c) par injection d'un deuxième flux magnétique d'une intensité prédéterminée traversant la bobine magnétique, qui est supérieur au premier flux magnétique d'une valeur prédéterminée, à la fois l'armature primaire et l'armature secondaire sont amenées dans leurs positions de commutation déterminées par la force magnétique, de sorte que la soupape de purge (134') adopte son deuxième état (II) et bloque ainsi son entrée (158) de sa première sortie (154) et de sa deuxième sortie (160).

6. Unité de soupape selon l'une quelconque des revendications 2 à 5, **caractérisée en ce que** la force de ressort exercée par le ressort (142) associé à l'armature primaire (138) sur l'armature primaire (138) est plus faible que la force de ressort exercée par le ressort (144) associé à l'armature secondaire (140) sur l'armature secondaire (140).

7. Unité de soupape selon l'une quelconque des revendications 2 à 6, **caractérisée en ce que** l'armature primaire (138) est l'armature secondaire (140) présentent des diamètres différents, notamment l'armature secondaire (140) présente un diamètre plus petit que l'armature primaire (138).

8. Unité de soupape selon l'une quelconque des revendications 2 à 6, **caractérisée en ce que** l'armature primaire (138) et l'armature secondaire (140) sont réalisées avec une construction identique.

9. Unité de soupape selon l'une quelconque des revendications 2 à 8, **caractérisée en ce que** l'armature primaire (138) et l'armature secondaire (140) plongent à des profondeurs différentes dans la bobine magnétique (146), notamment l'armature primaire (138) plonge plus profondément dans la bobine magnétique (146) que l'armature secondaire (140).

10. Unité de soupape selon l'une quelconque des revendications 3 à 9, **caractérisée en ce que** l'unité de soupape (86) présente une soupape de ventilation (133) avec une entrée (198) et une sortie (200),
a) l'entrée (198) de la soupape de ventilation (133) étant connectée à un premier organe de connexion (122) pouvant être connecté à une réserve d'air comprimé (18, 20),
b) la première sortie (154) de la soupape de purge (134) étant connectée par le biais du diaphragme (162) et la deuxième sortie (160) de la soupape de purge (134) étant connectée à un deuxième organe de connexion (128) pouvant être connecté au dispositif de purge (92), et
c) la sortie (200) de la soupape de ventilation (133) étant connectée à l'entrée (158) de la soupape de purge (134) et à un troisième organe de connexion (132) pouvant être connecté à l'entrée de commande (82) du dispositif de soupape (64) augmentant la quantité d'air.

11. Dispositif de commande de freinage électropneumatique (14) pour commander un frein de stationnement d'un véhicule, dans lequel sont prévus des cylindres de frein (12) à commande par air comprimé pour actionner des freins de roue, au moins un cylindre de freinage étant réalisé sous forme de cylindre de freinage à ressort accumulateur (12), et la partie de ressort accumulateur (30) du cylindre de freinage à ressort accumulateur (12) actionnant le frein de stationnement, avec au moins une unité de soupape (86) selon l'une quelconque des revendications 1 à 10, le troisième organe de connexion (132) de l'unité de soupape (86) étant connecté à l'entrée de commande pneumatique (82) du dispositif de soupape (64) augmentant la quantité d'air et le dispositif de soupape (64) augmentant la quantité d'air présentant une entrée (76) connectée à une conduite d'amenée d'air comprimé à la réserve d'air comprimé (18 ; 20) et une sortie (80) connectée à une conduite d'air comprimé allant à la partie de ressort accumulateur (30) du cylindre de freinage à ressort accumulateur (12), la pression à la sortie (80) du dispositif de soupape (64) augmentant la quantité d'air pouvant être commandée au moyen de la pression de commande applicable à l'entrée de commande (82).

12. Dispositif de commande, de freinage selon la revendication 11, **caractérisé en ce que** le dispositif de soupape augmentant la quantité d'air est une soupape relais (64), dont le piston de relais présente une ouverture qui relie la sortie de la soupape relais à l'entrée de commande de la soupape relais, de manière étranglée.

13. Dispositif de commande de freinage selon la revendication 12, **caractérisé en ce que** l'ouverture est un diaphragme (208), qui présente une plus grande surface en section transversale que la surface en, section transversale du diaphragme (162) de l'unité de soupape (86).

14. Instillation de frein de véhicule pneumatique à commande électrique, comprenant un frein de service et un frein de stationnement, le frein de service présentant une pédale de frein (22) et un cylindre de freinage (12) pouvant être actionné par de l'air comprimé en liaison fonctionnelle avec la pédale de frein (22), au moins un cylindre de freinage étant réalisé sous forme de cylindre de freinage à ressort accumulateur (12) et la partie de ressort accumulateur (30) du cylindre de freinage à ressort accumulateur (12) actionnant le frein de stationnement, et le fretin de stationnement présentant un générateur de signaux de frein de stationnement (36) pour actionner le frein de stationnement en purgeant la partie de ressort accumulateur (30) du cylindre de freinage à ressort accumulateur (12), l'installation de frein de véhicule présentant un dispositif de commande de freinage pour commander le frein de stationnement selon l'une quelconque des revendications 11 à 13.

15. Véhicule comprenant une installation de frein pneumatique à commande électrique selon la revendication 14.
